**Europäisches Patentamt**

**European Patent Office**

**Office européen des brevets**

(19)

(11) Veröffentlichungsnummer: **0 010 195**
**B1**

(12) **EUROPÄISCHE PATENTSCHRIFT**

(45) Veröffentlichungstag der Patentschrift: **07.04.82**

(21) Anmeldenummer: **79103611.4**

(22) Anmeldetag: **24.09.79**

(51) Int. Cl.³: **G 06 F 9/36,** G 06 F 13/00,
G 11 C 8/00

(54) **Vorrichtung zur Adressumwandlung in einer Datenverarbeitungsanlage.**

(30) Priorität: **23.10.78 US 953675**

(43) Veröffentlichungstag der Anmeldung:
**30.04.80 Patentblatt 80/9**

(45) Bekanntmachung des Hinweises auf die Patenterteilung:
**07.04.82 Patentblatt 82/14**

(84) Benannte Vertragsstaaten:
**DE FR GB**

(56) Entgegenhaltungen:
DE - A1 - 2 601 379
DE - A1 - 2 725 718
DE - A1 - 2 730 823
US - A - 3 781 808
US - A - 4 004 278
US - A - 4 096 568

Richard E. Matick "Computer Storage Systems
and technology", John Wiley & Sons, 1977,
S. 546—553

Rolston and Meek, "Encyclopedia of Computer
Science, 1976, S. 604—606, 1397—1399

(73) Patentinhaber: **International Business Machines
Corporation
Armonk, N.Y. 10504 (US)**

(72) Erfinder: **Mitchell, Glen Robert
Rt. 1
Pine Island, MN 55963 (US)**
Erfinder: **Houdek, Merle Edward
4121 NW 3 Street
Rochester, MN 55901 (US)**

(74) Vertreter: **Möhlen, Wolfgang C., Dipl.-Ing.
Säumerstrasse 4
CH-8803 Rüschlikon (CH)**

Courier Press, Leamington Spa, England.

## Vorrichtung zur Adressumwandlung in einer Datenverarbeitungsanlage

Die Erfindung bezieht sich auf die Adressumwandlung in einem Computer bzw. einer Datenverarbeitungsanlage und insbesondere auf einen Hash-Generator, der dafür sorgt, dass für ungleichmässig verteilte virtuelle Adressen gleichmässig verteilte Einträge in einer Hash-Tabelle erscheinen, wobei die Grösse der Hash-Tabelle veränderlich ist und von der Grösse des Hauptspeichers abhängt.

In einem Computersystem mit virtuellem Speicher müssen virtuelle Adressen in kürzere Hauptspeicheradressen übersetzt werden. Dazu wird ein Seitenverzeichnis benützt, in welchem jeder Eintrag einer Seite im Hauptspeicher entspricht. Jeder Eintrag im Seitenverzeichnis enthält eine virtuelle Speicheradresse und gegebenenfalls den Indexwert für den nächsten Seitenverzeichniseintrag in einer Folge von Verzeichnis einträgen. Wenn die umzuwandelnde virtuelle Adresse gleich der virtuellen Adresse im Seitenverzeichniseintrag ist, ist der Indexwert, der auf diesen Eintrag weist, equivalent der Hauptspeicheradresse für diese virtuelle Adresse. Ist die umzuwandelnde virtuelle Adresse nicht gleich der virtuellen Adresse im Seitenverzeichniseintrag, so wird der Indexwert im Eintrag benützt, um den nächsten Eintrag in der Eintragsfolge aufzufinden. Diese Vergleiche werden fortgesetzt bis zur Uebereinstimmung oder zum Ende der Folge.

Eine Methode, ein Seitenverzeichnis aufzustellen, ist die sogenannten Streutechnik, nach welcher die Einträge vorgenommen werden. Die Streutechnik kann auf jede Tabelle oder Datei angewendet werden, wenn freier Zugriff in unvorhersehbarer Reihenfolge verlangt wird und die Einträge durch einen Schlüssel gekennzeichnet sind, der sich auf ihren Inhalt bezieht. Die wesentliche Idee hinter der Streutechnik für die Uebersetzung virtueller Adressen liegt darin, dass die virtuelle Adresse benutzt wird, um die Hauptspeicheradresse im Seitenverzeichnis aufzufinden. Bei der Streutechnik wird der Schlüssel umgewandelt, d.h. im vorliegenden die virtuelle Adresse, um die Adresse in einer Tabelle zu finden, die den Schlüssel und den Eintrag mit dem Schlüssel enthält, im vorliegenden also die Hauptspeicheradresse.

Eine derartige Umwandlung, die "Hashing" oder "Hash-Codierung" (manchmal auch "Misch-Codierung" genannt wird, benützt einen Hash-Generator, um durch gewisse Routine-Operationen der Schlüssel (virtuelle Adresse) in eine Hash-Adresse umzuwandeln. Die Hash-Adressen werden zum Zugriff auf Tabelleneinträge benützt. Beim System, in dem die vorliegende Erfindung Anwendung findet, werden die virtuellen Adressen in Eintragsadressen für eine Hash-Tabelle umgewandelt, welche die Indexwerte für das Seitenverzeichnis enthält.

Mit einem Indexwert kann man zu einem einzelnen Eintrag im Seitenverzeichnis zugreifen, wobei aber, wie bereits gesagt, mit diesem Eintrag weitere Einträge zu einer Folge verkettet sein können. Im Idealfall würde durch die Umwandlung direkt ein bestimmter Eintrag erreicht (keine Ueberschneidungen), wobei aber andererseits auch keine unbenützten Positionen in der Hash-Tabelle vorkämen.

Solange nicht zwei Einträge mit derselben Hash-Adresse zusammenhängen, erfolgt das Suchen und das Einsetzen in einem einzelnen Schritt unabhängig von der Tabellengrösse. Wenn die Hash-Umwandlungsmethode jedoch für zwei Schlüssel dieselbe Hash-Adresse erzeugt, entsteht eine sogenannte Kollision. In diesem Falle steht der zweite Eintrag im Seitenverzeichnis "am falschen Platz", d.h. der zweite Eintrag hat einen Indexwert, der sich von Indexwert im zugehörigen Hash-Tabellen-Eintrag unterscheidet. Einträge mit Schlüssel, die dieselbe Hash-Adresse aufweisen, müssen im verzeichnis in eine Folge von Positionen gesetzt werden, die mit einer gemeinsamen Hash-Adresse verbunden sind. Der zweite und nachfolgende Einträge in einer Eintragsfolge können daher nicht in einem einzelnen Schritt gesucht oder eingesetzt werden. Hierzu wird mehr Zeit benötigt. Es ist daher wünschenswert, solche Kollisionen zu vermeiden, um Eintragsfolgen so kurz wie möglich zu halten. Je grösser die Zahl der Schlüssel ist, die eine gemeinsame Hash-Adresse aufweisen, desto länger wird die Folge von verketteten Einträgen und dementsprechend grösser die Zeitverzögerung, die zum Einsetzen oder Suchen benötigt wird, wenn auf die Einträge der Reihe nach zugegriffen werden muss.

Nach einem anderen Verfahren kann eine Hash-Tabelle hergestellt werden, indem die Einträge ihrem Wert nach geordnet werden. Das beste Suchverfahren für eine sortierte Tabelle benötigt im Durchschnitt mindestens $\log_2 N$ Versuche, um einen Eintrag zu finden, wobei $N$ die Tabellenlänge ist. Eine Schwierigkeit bei der Benutzung einer sortierten Tabelle besteht darin, dass, bevor alle Einträge gemacht sind, bei jedem neuen Eintrag die Tabelle neu sortiert werden muss, oder aber die Einträge in einer unsortierten Tabelle gesucht werden müssen, bis alle Einträge vollständig sind. In jedem Fall sind mehrere Suchvorgänge erforderlich. Wird die Hash-Tabelle nach der Streutechnik hergestellt, so sind wesentlich weniger Suchvorgänge erforderlich, um einen Eintrag aufzufinden. Ist die Anzahl der Einträge in der Hash-Tabelle gleich oder doppelt so gross wie die Zahl der Seiten im Hauptspeicher, so beträgt die durchschnittliche Länge der Eintragsfolge 1,25 Einträge im Seitenverzeichnis, wenn der Hash-Generator die Adressen im Verzeichnis gleichmässig verteilt.

Aus dem Stand der Technik sind verschiedene Hash-Generatoren bekannt. Beispielsweise kann der Schlüssel, die virtuelle Adresse, durch eine Zahl dividiert werden, die nahe bei der Zahl der Tabelleneinträge liegt und der erhaltene Rest als Hash-Eingangsadresse in die Tabelle benützt werden. Eine andere bekannte Methode besteht darin, einige Bits aus der Mitte des Quadrats des Schlüssels auszuwählen und diese Bits als Adresse für die Tabelle zu benützen. Beim Zeichen auf Zeile 18 die Seite 4a einfügen.

Diese bekannten Methoden stellen jedoch nicht eine gleichmässige Verteilung der Hash-Adressen bei einer ungleichmässigen Verteilung der Schlüssel sicher, wenn vorgesehen ist, die Grösse der Hash-Tabelle zu verändern, damit sie mit der Grösse des Hauptspeichers übereinstimmt, die in einem bestimmten Computer zur Verfügung steht. Bei bekannten Hash-Generatoren muss die Apparatur geändert werden, wenn die Grösse der Hash-Tabelle geändert werden soll. Ausserdem sorgen die bekannten Hash-Generatoren nicht für eine gleichmässige Verteilung der Hash-Adressen bei ungleichmässiger Verteilung der virtuellen Adressen in einem virtuellen Adresssystem, das eine variable Zahl von Objekten variabler Grösse aufweist.

Aus der US-A 3 781 808 ist es bekannt, zur Hash-Codierung einer logischen Adresse ausgewählte Bits aus dieser Adresse sowie zusätzliche Identifikations-Bits durch Exklusiv-oder-Verknüpfung zu kombinieren. Tabellen wechselnder Grösse können mit der gezeigten Einrichtung aber nicht durch hash-codierte Adressen variabler Länge optimal belegt werden.

Aehnliche Einrichtungen zur Hash-Codierung von virtuellen Adressen mit Identifikationsbits für die Adressierung von Uebersetzungstabellen sind auch im Buch "Computer Storage Systems and Technology" von R. E. Matick, John Wiley & Sons 1979 (Kapitel 9.3, 9.5 und 9.12) angegeben.

Die "Encyclopedia of Computer Science", Herausgeber A. Ralston, Van Nostrand Reinhold 1976, enthält auf den Seiten 604—606 eine kurze allgemeine Uebersicht der Hash-Codierungsmethoden, und auf den Seiten 1397—1400 eine Beschreibung der Schlüsseltransformation zum Tabellenzugriff mittels Hash-Codierung.

Aufgabe der in den Patentansprüchen gekennzeichneten Erfindung ist es, eine verbesserte Adressumwandlung für ein Computersystem mit virtuellem Speicher zu schaffen durch Benützung eines Hash-Generators, der eine gleichmässige Verteilung der Hash-Tabellenadressen trotz ungleichmässiger Verteilung der virtuellen Adressen sicherstellt, unabhängig davon, ob das virtuelle Speichersystem eine grosse Zahl kleiner Objekte oder eine kleine Zahl grosser Objekte umfasst. Ein weiteres Ziel der Erfindung ist eine Vorrichtung zur Erzeugung einer gleichmässigen Verteilung von Hash-Tabellenadressen aus einer ungleichmässigen Verteilung virtueller Adressen, wenn die Grösse der Hash-Tabelle variabel ist und von der Grösse des Hauptspeichers abhängt.

*Vorteile der Erfindung*

In einem virtuellen Speichersystem werden die Objekte oder Segmente normalerweise durch Zuordnung einer Objektidentifikation (Objekt ID) adressiert, und jedes Byte innerhalb des Objekts durch einen Relativzeiger identifiziert. Ein Bitfeld des Relativzeigers enhält die Seitenidentifikation (PID). Ein virtuelles Speichersystem kann eine grosse Zahl kleiner Objekte, eine kleine Zahl grosser Objekte oder irgend eine Mischung davon enthalten. Um eine gleichmässige Verteilung der Hash-Adressen in der Hash-Tabelle zu erreichen, die unabhängig von der Zahl und Grösse der Objekte im System ist, kann die Hash-Adresse durch Umkehr der PID-Bits und durch Verknüpfung derselben mit ausgewählten Bits der Objekt-ID in Exklusiv-ODER-Schaltungen erzeugt werden. Das bewirkt, dass der vorliegende Hash-Generator eine gleichmässige Verteilung der Hash-Adressen trotz ungleichmässiger Verteilung der virtuellen Adressen bei variabler Zahl von Objekten variabler Grösse sicherstellt.

Der Umfang der Hash-Tabelle ist variabel und hängt von der Grösse des Hauptspeichers bei der betreffenden Anwendung ab. Der Umfang der Hash-Tabelle wird so gewählt, dass die Anzahl der Einträge ausreicht, um die durchschnittliche Eintragsfolge auf annehmbarer Länge zu halten. Die Länge der Hash-Tabellenadressen, die von Hash-Generator erzeugt werden, ist durch den Umfang der Hash-Tabelle bestimmt. Die vorliegende Erfindung sorgt dafür, dass die PID-Bits mit den Objekt-ID-Bits ausgerichtet werden in Abhängigkeit von der Länge der zu erzeugenden Hash-Tabellenadresse, bevor die Bits in Exklusiv-ODER-Schaltungen verknüpft werden. Die hohen Bits werden entsprechend der Grösse der Hash-Tabelle am Ausgang auf Null gesetzt. Somit ist keine Aenderung des Hash-Generators notwendig, wenn der Umfang der Hash-Tabelle geändert wird.

Nachfolgend soll die Erfindung anhand von in den Zeichnungen dargestellten Ausführungsbeispielen im einzelnen erläutert werden.

*Die Zeichnungen*

Fig. 1 ist die schematische Darstellung eines Umwandlers für virtuelle Adressen, der einen Hash-Generator enthält.

Fig. 2 stellt die Struktur der virtuellen Adresse vom Typ A dar.

Fig. 3 stellt die Struktur der virtuellen Adresse vom Typ B dar.

Fig. 4 stellt graphisch die Abhängigkeit der Anzahl der Objekte von der durchschnittlichen Bytezahl pro Objekt in einem gegebenen Speichersystem dar.

Fig. 5 stellt zusammen mit Fig. 5A + B dar, wie die Bits einer virtuellen Adresse zur Bildung der Hash-Adresse beitragen.

Fig. 6 stellt schematisch die erfindungsgemässe Vorrichtung dar.

*Detailbeschreibung*

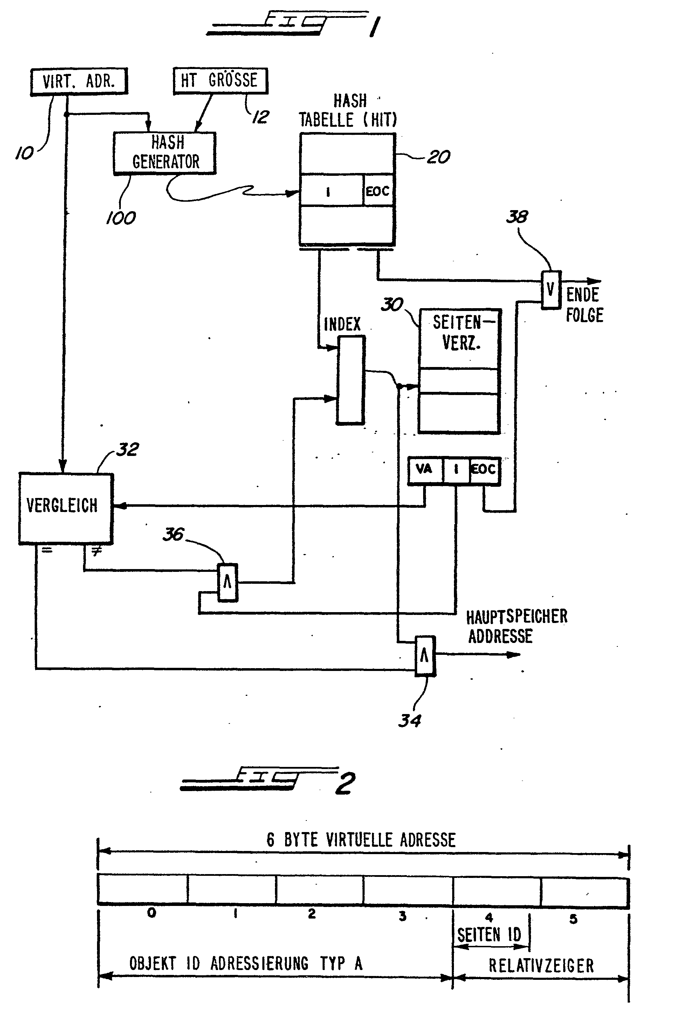

Fig. 1 zeigt schematisch eine Einrichtung zur Umformung virtueller Adressen in Hauptspeicheradressen. Die umzuformende virtuelle Adresse steht im Virtuell-Adressregister 10. Aus der Adresse wird vom Hash-Generator 100 eine Adresse für die Hash-Tabelle 20 (HIT) erzeugt. Die Hash-Tabelle 20 ist zwei Bytes breit, und jeder Eintrag enthält einen Indexwert für das Seitenverzeichnis 30, und zwar für den ersten Eintrag der Eintragsfolge, die zu der umzuformenden virtuellen Adresse gehört. Jeder Eintrag im Seitenver-zeichnis 30 entspricht einer Seite im nicht dargestellten Hauptspeicher und enthält eine virtuelle Adresse, die zum Indexwert für diesen Eintrag gehört. Die im Eintrag des Seitenverzeichnisses 30 enthaltene virtuelle Adresse gehört zum Indexwert für das Seitenverzeichnis 30, der vom Hash-Verzeichnis 20 stammt, und wird im Vergleicher 32 mit der umzuformenden virtuellen Adresse verglichen. Ist die virtuelle Adresse im Register 10 gleich der virtuellen Adresse des Eintrags im Seitenverzeichnis 30, dann ist der Indexwert für das Seitenverzeichnis 30 equivalent der Hauptspeicheradresse für diese virtuelle Adresse. Der Indexwert wird dann über UND-Schaltung 34 als Hauptspeicheradresse, die der virtuellen Adresse im Register 10 entspricht, an den Com-puter weitergeleitet. Wie die Hauptspeicher-adresse im Computer dann benützt wird, braucht hier nicht dargelegt zu werden. Die UND-Schaltung 34 wird durch das Vergleichssignal vom Ausgang der Schaltung 32 freigegeben.

Ist die umzuformende virtuelle Adresse nicht gleich der virtuellen Adresse im Eintrag im Seitenverzeichnis 30, der zu dem vom Hash-Verzeichnis 20 abgelesenen Indexwert gehört, dann wird der Folge-Indexwert in diesem Seitenverzeichniseintrag benützt, um den nächsten Eintrag in der Eintragsfolge im Seitenverzeichnis 30 aufzusuchen. Der Folge-Indexwert im laufenden Seitenverzeichniseintrag wird zum Zugriff auf den nächsten Eintrag im Seitenverzeichnis 30 benutzt, wenn die UND-Schaltung 36 durch das Nichtübereinstimmungssignal der Schaltung 32 freigegeben wird, nachdem der Vergleich fehlgeschlagen ist. Die virtuelle Adresse, die zum neuen Indexwert (Folge-Indexwert) gehört, wird dann mit der virtuellen Adresse im Register 10 in der Schaltung 32 verglichen. Diese Operation wird wiederholt, bis der Vergleich zwischen der virtuellen Adresse im Register 10 und einer virtuellen Adresse im zugehörigen Eintrag des Verzeichnisses 30 aufgeht, oder bis das Ende der Folge von Einträgen vorliegt. Ein das Ende der Folge betreffender Eintrag im Seitenverzeichnis 30 ergibt eine Seitenfehlanzeige, wenn die Vergleiche aller virtuellen Adressen in der Folge mit der umzuformenden Adresse fehlschlagen. Eine derartige Seitenfehlanzeige kommt vor, wenn die umzuformende virtuelle Adresse im Hauptspeicher nicht vorhanden ist. Ein Folgenendeeintrag kann auch von der Hash-Tabelle 20 kommen, wenn die von der umzuformenden virtuellen Adresse erzeugte Hash-Adresse keinen Index für das Seitenverzeichnis 30 enthält. Wenn entweder in der Hash-Tabelle 20, oder dem Seitenverzeichnis 30 das Ende der Folge angetroffen wird, erzeugt die ODER-Schaltung 38 ein Signal, damit der Computer entsprechend reagieren und z.B. die Daten eines Nebenspeichers in den Hauptspeicher übertragen kann. Diese durch die ODER-Schaltung 38 ausgelöste Reaktion des Computers gehört nicht zur vorliegenden Erfindung.

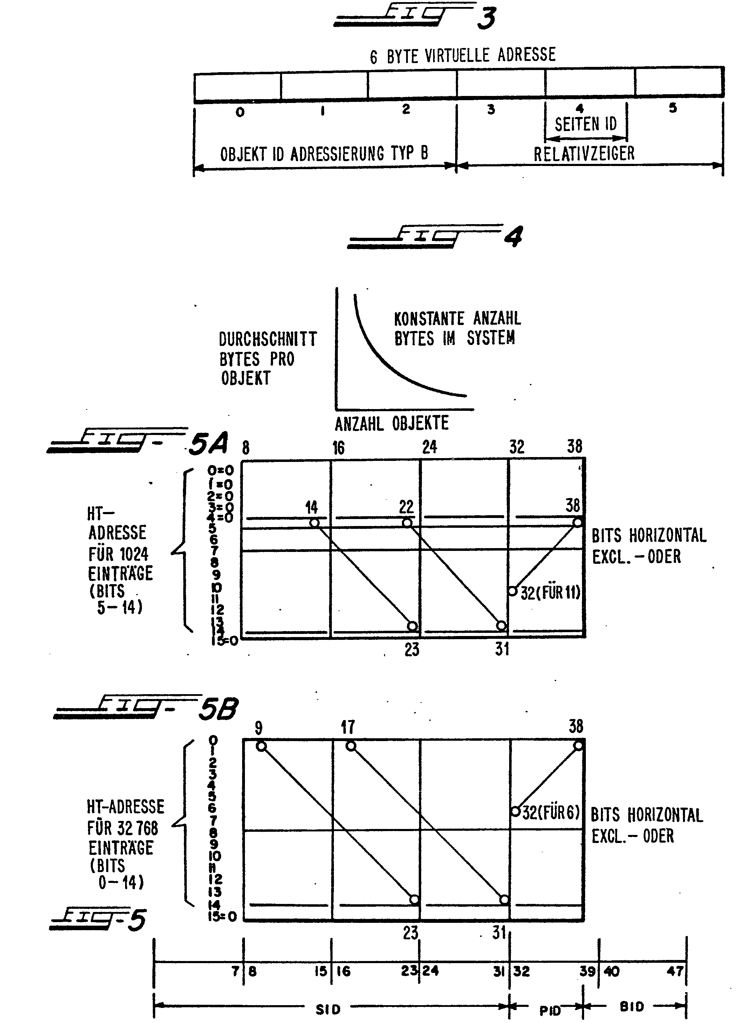

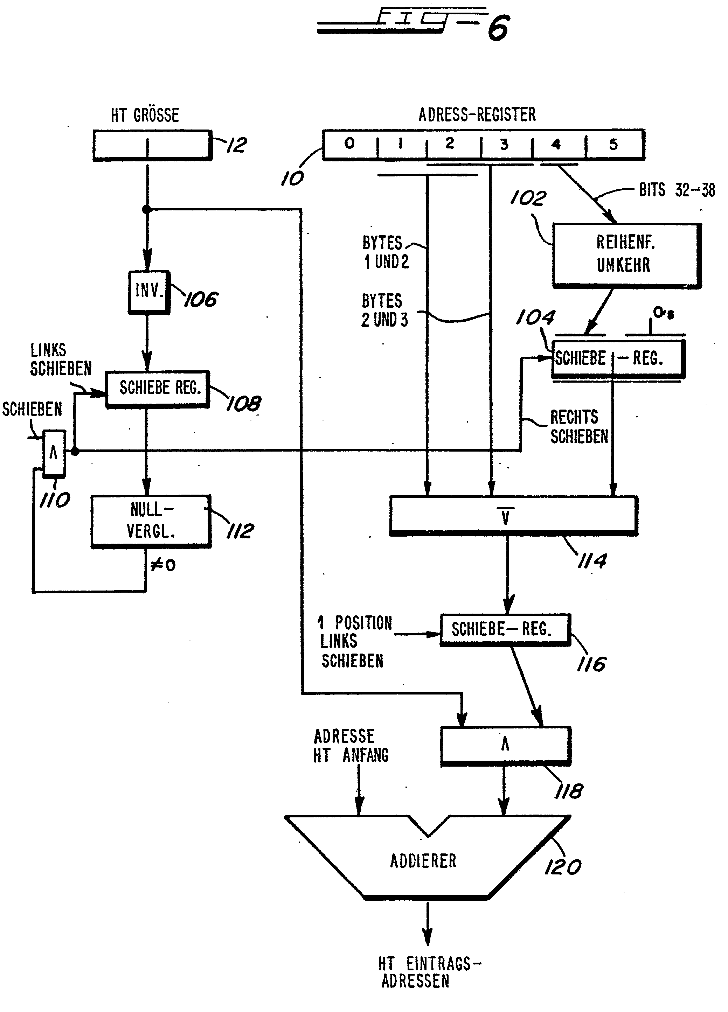

Nachfolgend sollen zwei Beispiele virtueller Adresssysteme beschrieben werden, die erfindungsgemäss benutzt werden können. Der Einfachheit halber werden sie als Typ A und Typ B bezeichnet. Sie sind in Fig. 2 und Fig. 3 dargestellt. In einem virtuellen Speichersystem wird den Objekten normalerweise eine Objektidentifikation (Objekt-ID) und ein Relativzeiger zugeordnet. Der virtuelle Speicher kann unterteilt werden in sogenannte Segmente, in welchem Fall die Objekt-ID-Bits zur Segment-identifikation (SID) werden. Die Relativzeiger-bits können dann zur Seitenidentifikation (PID) und zur Byte-Identifikation (BID) werden. Bei der Typ-A-Adressierung gemäss Fig. 2 kann ein Objekt bis zu $2^{16}$ Bytes gross werden und der gesamte adressierbare Raum kann $2^{32}$ Objekte umfassen. Nach der Typ-B-Adressierung gemäss Fig. 3 kann ein Objekt bis zu $2^{24}$ Bytes gross werden und der gesamte adressierbare Raum kann bis $2^{24}$ Objekte umfassen. Die Bezie-hung zwischen der Anzahl der Objekte und der durchschnittlichen Anzahl von Bytes pro Objekt in einem gegebenen Adressiersystem ist graphish in Fig. 4 dargestellt. Die Figuren 2, 3 und 4 zeigen somit, dass ein virtuelles Adressiersystem eine grosse Zahl kleiner Objekte oder eine kleine Zahl grosser Objekte oder eine Mischung von beiden umfassen kann. Wie noch beschrieben wird, ist der vorliegende Hash-Generator unabhängig von der Anzahl und Grösse der Objekte im System und von der Menge der Typ-A- oder Typ-B-Adressen, die benützt werden.

Fig. 6 zeigt ein Ausführungsbeispiel der vorliegenden Erfindung. Die umzuformende virtuelle Adresse steht im Adressregister 10. Der in Fig. 1 gezeigte Hash-Generator 100 formt die virtuelle Adresse in die Hash-Adresse der Hash-Tabelle 20 um, wobei die Länge der Adresse der Anzahl der Einträge der Hash-Tabelle 20 entspricht. Die Grösse der Hash-Tabelle 20 ist variabel und hängt von der Grösse des Haupt-speichers der entsprechenden Computerkon-figuration ab. Eine grössere Adresse kann daher eine grössere Anzahl von Einträgen in einer Hash-Tabelle 20 aufrufen, die wiederum eine grössere Anzahl von Einträgen im Seitenverzeichnis 30 adressieren kann. Wird angenommen, dass die Hash-Tabelle 20 gleich gross bleibt, obwohl der Hauptspeicher vergrössert wurde, so muss die durchschnittliche Länge der Eintragsfolge im Seitenverzeichnis 30 vergrössert werden, damit sie alle zusätzlichen Adressen des Hauptspeichers enthalten kann. Es ist wünschenswert, die Eintragsfolgen so kurz als möglich zu halten, damit die zur Adressumformung benötigte Zeit minimal bleibt. Die Arbeitsweise des Hash-Generators 100 ist unabhängig von der Grösse der Hash-Tabelle 20. Die Anzahl der Einträge in der Hash-Tabelle 20 kann daher vergrössert werden, wenn der Hauptspeicher vergrössert wird, und die Umformungszeit bleibt daher kurz.

Das Längenregister 12 wird gemäss der maximalen Grösse der Hash-Tabelle 20 ausgelegt. Es zeigt die der Anzahl der Einträge in der Hash-Tabelle entsprechende Länge der jeweils erforderlichen Hash-Tabellenadressen an. Das Register 12 enthält eine Anzahl aufeinanderfolgender rechtsstehender Bits, die auf Eins gesetzt sind, wobei die Zahl der Bits die Grösse der Hash-Tabelle 20 angibt. Die übrigen, linken aufeinanderfolgenden Bits im Register 12 sind auf Null gesetzt. Das Längenregister 12 sorgt dafür, dass bei wachsender Hash-Tabelle 20 die Arbeitsweise des Hash-Generators 100 nicht beeinflusst wird, und dass die Zahl der Bits hoher Ordnung in der Hash-Adresse, die vom Hash-Generator 100 erzeugt wird, und die auf Null stehen, entsprechend angepasst wird. Dies wird durch Mittel erreicht, welche die in ihrer Reihenfolge umgekehrten PID-Bits mit den Objekt-ID-Bits ausrichten und die Objekt-ID-Bits hoher Ordnung je nach Grösse der Hash-Tabelle abschneiden.

In der Ausführung nach Fig. 6 besteht der PID aus den Bits 32—38 des Bytes 4 der umzuformenden virtuellen Adresse. Die Reihenfolge der Bits im PID wird in der Schaltung 102 umgekehrt. Die umgekehrte Reihenfolge der Bits wird in die Positionen 1—7 des Schieberegisters 104 gesetzt. Das Bit 0 (erstes Bit) im Register 104 sowie die rechts stehenden Bits 8...15 werden dabei auf Null gesetzt. Der Inhalt des Längenregisters 12 wird vom Inverter 106 invertiert und dem Schieberegister 108 zugeführt. Der Inhalt des Schieberegisters 108 und der des Schieberegisters 104 werden dann solange nach links respektive rechts verschoben, bis das Register 108 lauter Nullen enthält. Dabei werden auf der einen Seite jedes Schieberegisters Nüllen eingeführt, während die auf der anderen Seite hinausgeschobenen Bits eliminiert werden. Zur Steuerung der Schiebeoperationen wird der Ausgang der UND-Schaltung 110 an die Linksverschiebeleitung des Registers 108 sowie die Rechtsverschiebeleitung des Registers 104 angelegt. Die UND-Schaltung 110 wird durch das Taktsignal und den Ausgang der Vergleichsschaltung 112 betätigt. Die Schaltung 112 gibt ein Ausgangssignal ab, wenn wenigstens ein Bit im Schieberegister 108 nicht gleich Null ist. Dadurch wird eine Ausrichtung für die in ihrer Reihenfolge umgekehrten PID-Bits im Schieberegister 104 erreicht, die von der Anzahl der Einträge in der Hash-Tabelle 20 gegeben ist.

Durch Anlegen des Inhalts des Schieberegisters 104 an die Exklusiv-ODER-Schaltung 114 zusammen mit den Bits der Bytes 1 und 2 sowie der Bytes 2 und 3 der virtuellen Adresse im Register 10 werden diese drei Bit-Gruppen in einer Exklusiv-ODER-Verknüpfung kombiniert. Die Ausrichtung der PID-Bits variert also mit der Zahl der Einträge in der Hash-Tabelle, weil die Zahl der Rechtsverschiebungen im Schieberegister 104 durch die Zahl der Nullen im Längenregister 12 bestimmt wird.

Als nächstes wird der Ausgang der Exklusiv-ODER-Schaltung 114 in das Schieberegister 116 gesetzt. Der Inhalt dieses Registers wird um eine Position nach links verschoben, damit in der äusserst rechten Stelle des Registers eine Null steht. Dies geschieht, weil jeder Eintrag in der Hash-Tabelle 20 zwei Bytes enthält, und das Einsetzen einer Null in diese Bitposition erleichtert den gleichzeitigen Zugriff auf zwei Bytes der Hash-Tabelle im Hauptspeicher, wenn der Hauptspeicher byteweise adresiert wird. Das Verfahren, zwei Bytes der Hash-Tabelle im Hauptspeicher auf einmal zu adressieren, ist nicht Teil der vorliegenden Erfindung.

Schliesslich wird der Inhalt des Schieberegisters 116 über die Mehrfach-UND-Schaltung 118 auf den Addierer 120 übertragen. Die UND-Schaltung 118 wird bitweise durch die entsprechenden Bits vom Längenregister 12 gesteuert, so dass die links äusseren Bits des Registers 116 null gesetzt werden. Die Grösse der Hash-Eingangsadressen vom Hash-Generator 100 werden durch die Grösse der Hash-Tabelle 20 bestimmt. Der Addierer 120 addiert den Hash-Ausgang der UND-Schaltung 118 zur Adresse des Anfangs der Hash-Tabelle 20 und produziert so die Adresse des Eintrags für die zu übertragende virtuelle Adresse.

Derart wird die Arbeitsweise des Hash-Generators 100 unabhängig von der Grösse der Hash-Tabelle 20 und damit von der Grösse des Hauptspeichers.

Fig. 5A und 5B zeigen, wie die Bits der Hashtabellen-adressen aus den Bits der virtuellen Adressen zusammengesetzt werden. In der Spalte links neben dem Rechteckkasten sind die Bitnummern der resultierenden Hashtabellen-Adresse (HT) angegeben. In der Zeile über dem Rechteckkasten sind die Bitnummern der vorgegebenen virtuellen Adresse angegeben. Die drei bzw. zwei der in je einer Zeile durch die schrägen Striche angegebenen Bits werden verknüpft, um ein Bit der HT-Adresse zu erhalten (dessen Nummer links an der Zeile steht). Bei Fig. 5A entstehen HT-Adressen mit 10 Bitstellen (z.B. HT-Bit 5 aus VA-Bits 14, 22 und 38, oder HT-Bit 14 aus VA-Bits 23 und 31).
Bei Fig. 5B entstehen HT-Adressen mit 15 Bitstellen (z.B. HT-Bit 0 aus VA-Bits 9, 17 und 38, oder HT-Bit 14 aus VA-Bits 23 und 31).

## Patentansprüche

1. Vorrichtung zur Adressumwandlung in einer Datenverarbeitungsanlage, um aus einer virtuellen Adresse die Adresse eines Tabelleneintrags zu gewinnen, wobei die virtuelle Adresse einen ersten Teil (OID) zur Adressierung eines Objektes und einen zweiten Teil (PID) zur Adressierung innerhalb des Objektes aufweist, und wobei eine erste Bitgruppe (Bits 32 ... 38), sowie mindestens eine zweite Bitgruppe (Bytes 1 und 2) der in einem Virtuell-Adressregister (10) enthaltenen virtuellen Adresse in einer Exklusiv-Oder-Schaltung (114) durch Hash-Codierung zur Erzeugung der Tabelleneintrags-Adresse verknüpft werden, gekennzeichnet durch

—ein Längenregister (12) zur Anzeige der jeweiligen Länge der zu erzeugenden Tabelleneintrags-Adressen,

—eine mit dem Längenregister verbundene Schiebeeinrichtung (104, 106, 108, 110, 112) zur relativen Verschiebung der ersten aus dem zweiten Teil der virtuellen Adresse ausgewählten Bitgruppe (Bits 32 ... 38) gegenüber der zweiten aus dem ersten Teil der virtuellen Adresse ausgewählten Bitgruppe (Bytes 1 und 2) in Abhängigkeit von der jeweiligen Längenangabe, wobei der Exklusiv-Oder-Schaltung die so ausgerichtete erste und die zweite Bitgruppe zugeführt werden, sowie

—eine mit dem Längenregister und dem Ausgang der Exklusiv-Oder-Schaltung verbundene Auswahlschaltung (118) zur Unterdrückung der nicht benötigten führenden Bits aus dem Verknüpfungsergebnis der Exklusiv-Oder-Schaltung.

2. Vorrichtung nach Anspruch 1, gekennzeichnet durch eine Umkehreinrichtung (102) zur Umkehr der Reihenfolge der ersten vorgegebenen Bitgruppe (Bits 32 ... 38) aus dem Virtuell-Adressregister (10) vor deren Zuführung zu der Schiebeeinrichtung (104, 106, 108, 110, 112).

3. Vorrichtung nach Anspruch 1 oder 2, dadurch gekennzeichnet, dass in der Exklusiv-Oder-Schaltung (114) mit der ersten (Bits 32 ... 38) und der zweiten (Bytes 1 und 2) Bitgruppe eine weitere dritte Bitgruppe (Bytes 2 und 3) der virtuellen Adresse verknüpft wird, wobei der Exklusiv-Oder-Schaltung die erste Bitgruppe indirekt als Ausgangswerte der Schiebeeinrichtung (104, 106, 108, 110, 112) sowie aus dem Virtuell-Adressregister (10) direkt als zweite und dritte Bitgruppe zwei gleichlange Bitgruppen zugeführt werden, die infolge Ueberlappung eine Mehrzahl von Bits gemeinsam haben.

4. Vorrichtung nach Anspruch 3, dadurch gekennzeichnet, dass die Anzahl Verknüpfungsglieder der Exklusiv-Oder-Schaltung (114), die Anzahl der Ausgangsbinärwerte der Schiebeeinrichtung (104, 106, 108, 110, 112) sowie die Anzahl der Bits der zweiten (Byte 1 und 2) und dritten (Byte 2 und 3) Bitgruppe einander gleich sind; dass die Anzahl der Bits der ersten Bitgruppe (Bits 32 ... 38) kleiner ist als die der zweiten und dritten Bitgruppe; und dass die der Schiebeeinrichtung zugeführten Bits der ersten Bitgruppe durch Nullen auf eine der zweiten und dritten Bitgruppe entsprechende Anzahl ergänzt werden.

5. Vorrichtung nach einem der vorangehenden Ansprüche, dadurch gekennzeichnet, dass die Schiebeeinrichtung (104, 106, 108, 110, 112) so beschaffen ist, dass sie aufgrund einer im Längenregister befindlichen Längenangabe eine der Anzahl nichtsignifikanter, d.h. später zu unterdrückender führender Bits entsprechende Anzahl Verschiebungsschritte vornimmt, wobei die erste Bitgruppe (Bits 32 ... 38) so verschoben wird, dass sie denjenigen höchstwertigen Stellen der Exklusiv-Oder-Schaltung (114) zugeführt wird, deren Ausgangswert in der Auswahlschaltung (118) nicht unterdrückt wird.

6. Vorrichtung nach einem der vorangehenden Ansprüche, dadurch gekennzeichnet, dass das Längenregister (12) eine Anzahl Bitstellen umfasst, welche der maximalen Anzahl Bitstellen der Tabelleneintrags-Adressen entspricht, zur Aufnahme einer Längenangabe, welche auf der einen Seite eine die jeweilige Adresslänge darstellende Anzahl Bits eines ersten Binärwerts enthält, wobei die verbleibenden Bits der anderen Seite den andern Binärwert haben; und dass die Schiebeeinrichtung eine Steueranordnung (106, 108, 110, 112) enthält zur Erzeugung einer der Anzahl von Bits des andern Binärwerts entsprechenden Zahl von Schiebeimpulsen, sowie ein Schieberegister (104) zur Aufnahme der ersten, gegebenenfalls reihenfolgeinvertierten Bitgruppe (Bits 32 ... 38) in höherwertige Bitpositionen sowie deren Verschiebung in Richtung niederwertiger Bitpositionen aufgrund der Schiebeimpulse.

## Revendications

1. Dispositif pour la conversion d'adresses dans un système de traitement de données pour obtenir, à partir d'une adresse virtuelle, l'adresse d'une entrée de tableau, l adresse virtuelle comportant une première partie (OID) pour adresser un objet et une seconde partie (PID) pour l'adressage à l'intérieur de cet objet; un premier groupe de bits (bits 32 ... 38), et au moins un second groupe de bits (multiplets 1 et 2) d'une adresse virtuelle emmagasinée dans un registre d'adresse virtuelle (10) étant combinés dans un circuit OU Exclusif (114) par un codage dit hash pour générer une adresse d'entrée de tableau; ledit dispositif étant caractérisé en ce qu'il comprend:

un registre de longueur (12) pour indiquer la longueur respective des adresses d'entrée de tableau à générer,

un dispositif de décalage (104, 106, 108, 110, 112) connecté audit registre de longueur, pour le décalage relatif du premier groupe de bits (bits 32 ... 38) sélectionné à partir de la seconde partie de l'adresse virtuelle par rapport au second groupe de bits (multiplets 1 et 2) sélectionné à partir de la première partie de l'adresse virtuelle, en fonction de l'indication de longueur respective, ledit circuit OU-Exclusif recevant les premier et second groupes de bits ainsi alignés; et

un circuit de sélection (118) connecté audit registre de longueur et à la sortie dudit circuit OU-Exclusif pour supprimer, dans le résultat de combinaison du circuit OU-Exclusif, les bits de gauche qui ne sont pas nécessaires.

2. Dispositif selon la revendication 1, caractérisé par un dispositif d'inversion (102) pour inverser la séquence du premier groupe de bits prédéterminé (bits 32 ... 38) dans ledit registre d'adresse virtuelle (10) avant d'être amenée audit dispositif de décalage (104, 106, 108, 110, 112).

3. Dispositif selon la revendication 1 ou 2, caractérisé en ce qu'on combine dans ledit circuit OU-Exclusif (114) un autre troisième groupe de bits (multiplets 2 et 3) de l'adresse virtuelle avec le premier groupe de bits (bits 32 ... 38) et le second groupe de bits (multiplets 1 et 2); ledit circuit OU-Exclusif recevant le premier groupe de bits indirectement comme valeur de sortie dudit dispositif de décalage (104, 106, 108, 110, 112), et recevant directement, dudit registre d'adresses virtuelles (10), comme second et troisième groupes de bits, deux groupes de bits de même longueur qui, à la suite d'un chevauchement, ont plusieurs bits en commun.

4. Dispositif selon la revendication 3, caractérisé en ce que les éléments logiques dudit circuit OU-Exclusif (114), les valeurs binaires de sortie dudit dispositif de décalage (104, 106, 108, 110, 112), ainsi que les bits du second groupe de bits (multiplets 1 et 2) et du troisième groupe de bits (multiplets 2 et 3) sont de nombre égal; en ce que le nombre de bits du premier groupe de bits (bits 32 ... 38) est plus petit que celui des second et troisième groupes de bits, et en ce que les bits du premier groupe de bits appliqués audit dispositif de décalage sont complétés par des zéros pour atteindre un nombre correspondant au second et troisième groupes de bits.

5. Dispositif selon l'une des revendications précédentes, caractérisé en ce que ledit dispositif de décalage (104, 106, 108, 110, 112) est conçu de telle sorte qu'il effectue un nombre d'étapes de décalage correspondant au nombre de bits de gauche non significatifs, c'est-à-dire à supprimer ultérieurement, à la suite d'une indication de longueur contenue dans ledit registre de longueur, le premier groupe de bits (bits 32 ... 38) étant décalé de telle sorte qu'il est appliqué aux positions de poids supérieur dudit circuit OU-Exclusif (114) dont la valeur de sortie n'est pas supprimée dans ledit circuit de sélection (118).

6. Dispositif selon l'une des revendications précédentes, caractérisé en ce que ledit registre de longueur (12) comporte une pluralité de positions de bits qui correspond au nombre maximum des positions de bits desdites adresses d'entrée de tableau pour stocker une indication de longueur qui comporte d'un côté un nombre de bits d'une première valeur binaire représentant la longueur d'adresse respective, les bits restants de l'autre côté contenant l'autre valeur binaire; et en ce que ledit dispositif de décalage comporte un arrangement de commande (106, 108, 110, 112) pour générer un certain nombre d'impulsions de décalage correspondant au nombre de bits de l'autre valeur binaire ainsi qu'un registre à décalage (104) pour stocker le premier groupe de bits (bits 32 ... 38), éventuellement en séquences inversées, dans des positions de bits de poids supérieur et pour les décaler, par des impulsions de décalage, vers les positions de bits à poids supérieur.

**Claims**

1. Address conversion apparatus in a data processing system, for converting a virtual address into a table entry address, said virtual address including a first part (OID) for addressing an object and a second part (PID) for addressing within that object; a first bit group (bits 32 ... 38) and at least a second bit group (bytes 1 and 2) of a virtual address stored in a virtual address register (10) being combined in exclusive-or circuitry (114) by hash coding for generating a table entry address; characterized in that it comprises:

— a length register (12) for indicating the respecitve length of the table entry addresses to be generated;

— shifting means (104, 106, 108, 110, 112) connected to said length register, for relatively shifting said first bit group (bits 32 ... 38) selected from the second part of said virtual address, with respect to said second bit group (bytes 1 and 2) selected from the first part of said virtual address, in dependence of the respective length indication, the aligned first bit group and the second bit group being furnished to said exclusive-or circuitry; and

— selection means (118) connected to said length register and to the output of said exclusive-or circuitry, for suppressing in the combination result of said exclusive-or circuitry those leading bits which are not required.

2. Apparatus in accordance with claim 1, characterized by reversing means (102) for reversing the sequence of the first given bit group (bits 32 ... 38) in the virtual address

7

register (10) prior to its application to said shifting means (104, 106, 108, 110, 112).

3. Apparatus in accordance with claim 1 or 2, characterized in that in said exclusive-or circuitry (114) a further third bit group (bytes 2 and 3) of the virtual address is combined with the first (bits 32 ... 38) and second (bytes 1 and 2) bit groups; the first bit group being indirectly furnished to said exclusive-or circuitry as output values of said shifting means (104, 106, 108, 110, 112); and two equal-length bit groups having a plurality of bits in common due to overlap, being furnished to said exclusive-or circuitry directly from said virtual address register (10) as second and third bit group.

4. Apparatus in accordance with claim 3, characterized in that the number of logic gates in said exclusive-or circuitry (114), the number of binary output values of said shifting means (104, 106, 108, 110, 112) and the number of bits in said second (bytes 1 and 2) and third (bytes 2 and 3) bit groups are equal; that the number of bits in said first bit group (bits 32 ... 38) is less than that in said second and third bit groups; and that the bits of said first group furnished to said shifting means are supplemented by zeros to a number that is equal to the number of bits in said second and third bit groups.

5. Apparatus in accordance with any one of the preceding claims, characterized in that said shifting means (104, 106, 108, 110, 112) are so designed that they effect, in response to a length indication contained in said length register, a number of shifting steps which corresponds to the number of non-significant leading bits to be suppressed; said first bit group (bits 32 ... 38) being so shifted that it is furnished to the highest valued positions in said exclusive-or circuitry (114) of which the output value is not suppressed in said selection means (118).

6. Apparatus in accordance with any one of the preceding claims, characterized in that said length register (12) comprises a number of bit positions which corresponds to the maximum number of bit positions in the table entry addresses, for storing a length indication which includes on its one side a number of bits of a first binary value which represents the current address length, while the remaining bits on the other side have the other binary value; and that said shifting means include a control arrangement (106, 108, 110, 112) for generating a number of shift pulses which corresponds to the number of bits of the other binary value, and a shift register (104) for inserting said first bit group (bits 32 ... 38), possibly in reversed order, in higher valued bit positions and for shifting it towards bit positions of lower value in response to said shift pulses.

0 010 195

FIG 1

VIRT. ADR.

HT GRÖSSE

HASH GENERATOR

HASH TABELLE (HIT)

I | EOC

20

INDEX

30

SEITEN-VERZ.

V ENDE FOLGE

38

VA | I | EOC

VERGLEICH

32

= ≠

∧

36

HAUPTSPEICHER ADDRESSE

∧

34

FIG 2

6 BYTE VIRTUELLE ADRESSE

0 | 1 | 2 | 3 | 4 | 5

SEITEN ID

OBJEKT ID ADRESSIERUNG TYP A

RELATIVZEIGER

**0010195**

FIG. 3

6 BYTE VIRTUELLE ADRESSE

OBJEKT ID ADRESSIERUNG TYP B

SEITEN ID

RELATIVZEIGER

FIG. 4

DURCHSCHNITT BYTES PRO OBJEKT

KONSTANTE ANZAHL BYTES IM SYSTEM

ANZAHL OBJEKTE

FIG. 5A

HT-ADRESSE FÜR 1024 EINTRÄGE (BITS 5-14)

BITS HORIZONTAL EXCL.-ODER

32(FÜR 11)

FIG. 5B

HT-ADRESSE FÜR 32 768 EINTRÄGE (BITS 0-14)

BITS HORIZONTAL EXCL.-ODER

32(FÜR 6)

FIG. 5

SID        PID      BID

**FIG-6**